Europäisches Patentamt

(19) European Patent Office

Office européen des brevets

(11) Publication number: **0 125 755**
**B1**

(12) **EUROPEAN PATENT SPECIFICATION**

(45) Date of publication of patent specification: **23.09.87**

(51) Int. Cl.⁴: **A 01 D 90/08**

(21) Application number: **84301642.9**

(22) Date of filing: **12.03.84**

(54) Agricultural bale loader.

(30) Priority: **29.03.83 GB 8308621**

(43) Date of publication of application:
**21.11.84 Bulletin 84/47**

(45) Publication of the grant of the patent:
**23.09.87 Bulletin 87/39**

(84) Designated Contracting States:
**DE FR GB**

(56) References cited:
**GB-A-2 026 429**
**GB-A-2 063 206**
**US-A-4 084 707**

(73) Proprietor: **Eyre, Geoffrey Coupland**
**Mill Farm Brough**
**Bradwell near Sheffield S30 2HG (GB)**

(72) Inventor: **Eyre, Geoffrey Coupland**
**Mill Farm Brough**
**Bradwell near Sheffield S30 2HG (GB)**

(74) Representative: **Ford, Michael Frederick et al**
**MEWBURN ELLIS & CO. 2/3 Cursitor Street**
**London EC4A 1BQ (GB)**

Courier Press, Leamington Spa, England.

## Description

The invention relates to an agricultural bale loader, particularly for the loading of round bales.

The production of round bales of hay and straw for the feeding of cattle and/or the production of round bales of silage is becoming more and more popular in the farming community. However, because of their large volume and heavy weight, particularly of silage crops, the handling of round bales presents something of a problem, especially for one man working alone.

Various items of equipment are available for the handling of round bales. For example, a loader is known in accordance with the prior art portion of Claim 1 (GB—A—2026429) in which mechanism is provided for lifting bales in turn onto a load-carrying frame, the mechanism being constituted by lifting arms having means projecting forwardly from their outer ends, the arrangement being such that the means can be brought into contact with bales standing on the ground by forward motion of the vehicle of which the loader forms a part.

With a single mechanism of this kind, further mechanism is required to displace the individual bales into and along the frame as they are loaded in turn, thus resulting in considerable complexity and cost.

Further mechanism is known (GB—A—2063206) in which a projecting spike is used for the purpose of lifting a round bale. However, this has been used in association with conveyor means for the unrolling or reduction of round bales and not for the loading and transportation of a plurality of round bales.

The invention as claimed solves the problem of how to design an agricultural bale loader in the most cost effective manner, the loader being used by one man working alone to collect bales standing in a field in a very short space of time.

One way of carrying out the invention is described in detail below with reference to drawings which illustrate, by way of example only, specific embodiments, of which:—

Figure 1 is a side view of a bale loader embodying the invention, and built as an integral part of a trailer vehicle,

Figure 2 is a sectional view on the line 2—2 in Figure 1,

Figure 3 is a plan view,

Figure 4 is a schematic view showing the bale loader being used in a field,

Figure 5 is a perspective view of a bale loader built as a unit fixed on an existing trailer vehicle,

Figures 6 to 9 are detail views thereof which will be referred to, and

Figure 10 is a semi-diagrammatic view which illustrates a possible modification of the bale loader of Figures 5 to 9.

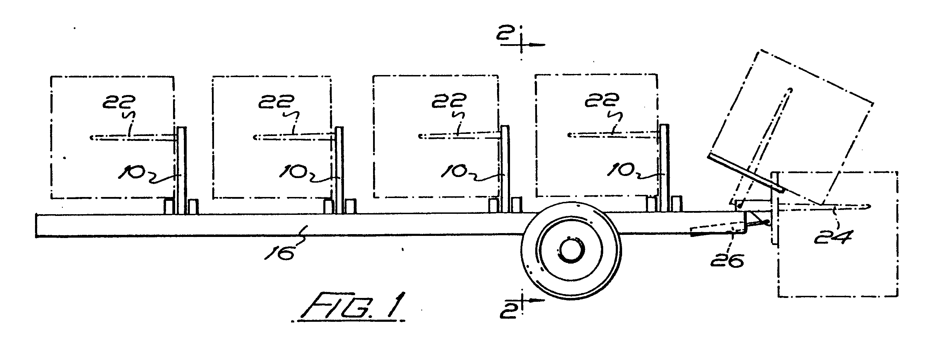

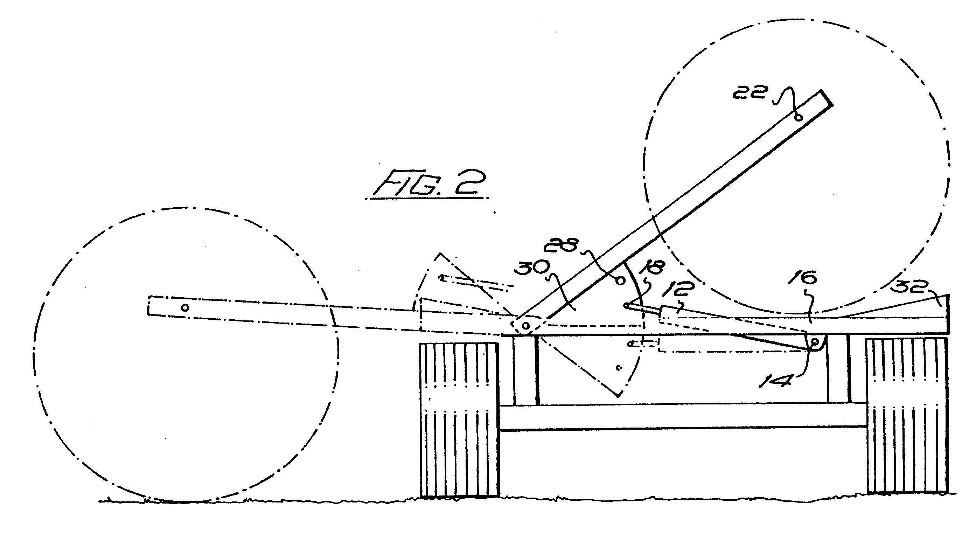

Referring now to Figures 1 to 3 of the drawings, the agricultural bale loader there illustrated is especially intended for handling round bales which because of their large volume and heavy weight, particularly of silage crops, generally present something of a problem. As shown, the loader comprises a wheeled trailer which can be connected to a tractor vehicle for towing and which is provided with a number of lifting arms 10 pivotally connected to the trailer for pivotal movement outboard or inboard of the trailer as best seen in Figure 2. Power operated means are provided for moving the lifting arms, selectively, said power operated means being constituted by respective double acting hydraulic rams 12. The cylinders of the hydraulic rams are shown to be pivotally connected, by respective pivot pins 14, beneath a load-carrying deck structure 16 of the trailer. The outer ends of the piston rods of the rams are pivotally connected to the respective lifting arms by respective pivot pins 18.

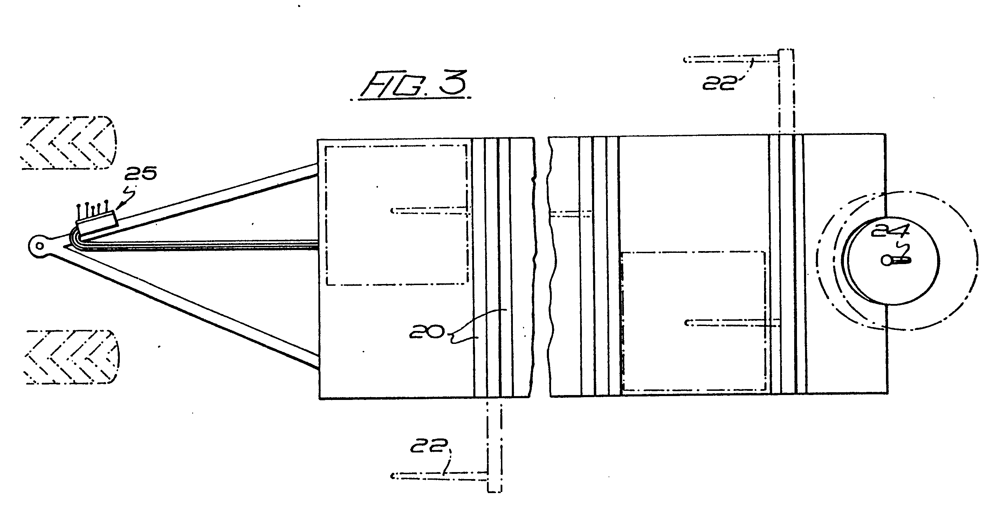

As best shown in Figure 3, the lifting arms are arranged to project alternately from opposite sides of the trailer along the length of the load-carrying deck structure and are pivotally mounted between respective pairs of transverse cross members 20, 20; their pivotal connections to the trailer are shown to be set inwardly from the side edges of the load-carrying deck so that they are supported by said pairs of cross members against rearward bending when in their laterally projecting positions.

The lifting arms 10 have respective spikes 22 projecting forwardly from their outer ends and the arrangement is such that a number of bales lying on the ground can be loaded in turn onto the load-carrying deck of the trailer by driving the respective spikes into the bales by forward motion of the trailer and by the lifting of the respective lifting arms inboard of the trailer. A rear end of the loader is provided with a pivotally mounted spike 24 capable of being caused to project rearwardly of the load-carrying deck. The spike 24 can be driven into a bale (for example a bale lying alongside a 'headland' which would be otherwise difficult to spike) by reversing the loader; the bale can then be loaded onto the rear of the load-carrying deck by pivoting the spike 24 to a vertical or near vertical position by its own power operated means, that is to say by its own hydraulic ram 26 (see Figure 1). The weight of this first bale on the rear end of the loader stabilises the trailer in readiness for other bales to be picked up from the opposite sides of the device, and of course the tractor driver has an unimpeded view of the rearwardly located spike 24 before bales have been picked up from the opposite sides of the loader and positioned on it forwardly of the spike 24.

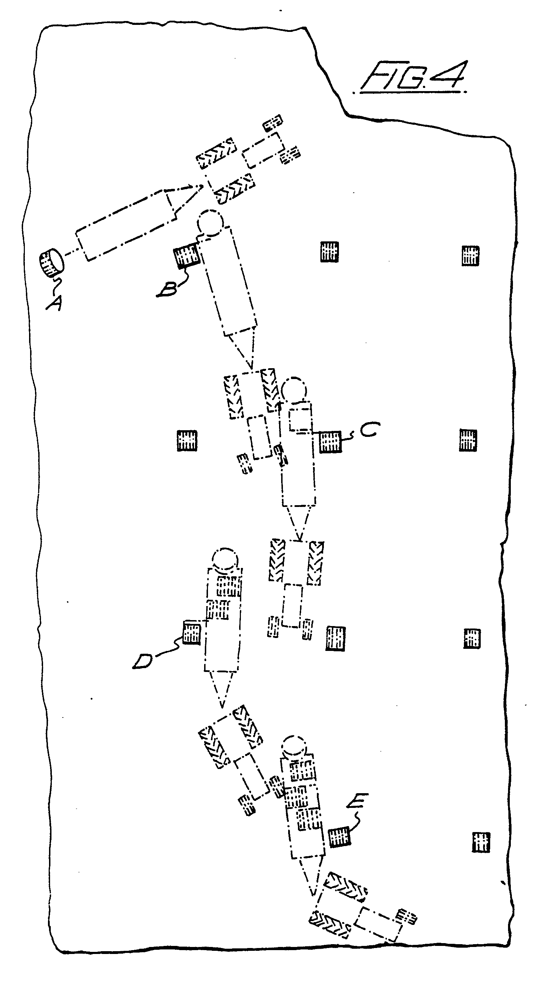

Since the illustrated bale loader is shown to be provided with five hydraulic rams for the selective operation of the four lifting arms 10 and of the rear mounted spike 24, the drawbar of the trailer is provided with a five-lever control valve assembly 25 within reach of the driver of a tractor to which the baler is connected. Referring in particular to Figure 4, when gathering the bales shown to be lying in a field using a bale loader embodying the invention, the tractor driver would probably first back up to and load the bale A shown to be lying alongside a headland and could then conveniently drive alongside and load the bales marked *B, C, D* and *E* in that order and as indicated in chain-dotted lines in the drawing, that is to say loading the trailer by the rearmost lifting arms and then working forwards. Having spiked a bale, the driver can be driving towards a next bale whilst the already spiked bale is still being lifted into position on the trailer. This vastly improves the overall speed of operation of collecting bales standing in a field and the entire loading operation can be very quickly and efficiently carried out. The operation of unloading the bales can of course be carried out in reverse order by swinging them outboard in turn and then reversing the trailer to detach the respective spike from each bale (except in the case of the rearmost bale which will of course be lowered and then left standing in the required location by forward motion of the trailer).

The arrangement is such that when not required for bale loading the device can quickly be converted so that it can be used as a conventional load-carrying trailer. The conversion is made by removing the pivot pins 18 and by reconnecting the piston rods of the hydraulic rams 12 to the respective lifting arms 10 using alternative connection holes 28 in connecting plates 30. When this has been done, the lifting arms can be fully retracted into the transverse slots between the pairs of transverse cross members so that the device then becomes a flat-topped or substantially flat-topped trailer. (It will be seen that the outer end portions of the pairs of cross members 20, 20 are provided with upstanding abutment portions 32; these are provided so that when being used for bale loading the lifting arms will be supported against rearward bending when not fully lowered, as will occur when the loading operation is being performed on undulating ground. It will be understood that before the lifting arms can be fully retracted into the transverse slots between the pairs of transverse cross members it may be necessary to remove the forwardly projecting spikes 22 and to store them away until a baling operation is to be again carried out. However, this is not necessarily so; the deck of the trailer may have longitudinally extending slots into which the spikes can be retracted, or the spikes may be caused to lie alongside the decking of the trailer.

Thus there is provided a bale loader which can easily be adapted for the transporting of other goods. It will also be understood that the lifting arms 10 can be used for lifting other loads onto the trailer; for example the forwardly projecting spike of a lifting arm could be hooked under a lifting chain or wire attached to a load-carrying skip bin or the like, or in fact at least one of the spikes can be replaced by a jib element having at least one loading hook.

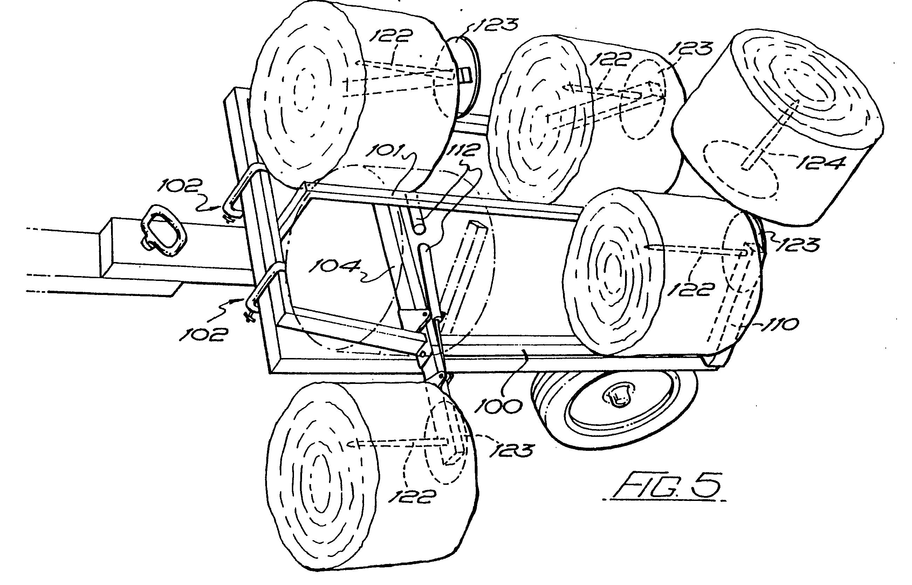

Referring now to Figures 5 to 9, the bale loading mechanism there illustrated has been built as a unit which can be mounted for use on a standard load-carrying trailer but which can quickly be detached from the trailer when not required. (Figures 5 to 9 show very slight variations one to another which will be referred to in turn.) As shown, the basic mechanism in this case includes a frame generally indicated 100 which can be clamped onto the trailer by means of clamps 102. (Only the clamps at the front of the frame are visible in Figure 5, but it will be understood that other similar clamps will be provided at the rear and/or along the sides of the frame.) The frame has oppositely disposed box section members 104 the outer ends of which are pivotally connected by means of respective pivot pins 106 to lifting arms 110. Respective double acting hydraulic rams 112 which are provided for moving the lifting arms, selectively, between lifted and lowered positions have their cylinders pivotally connected by respective pivot pins 114 between respective pairs of upstanding plates 113 welded to the box section member 104 of the frame. The piston rods of the hydraulic rams are pivotally connected by respective pivot pins 118 between respective pairs of plates 117 welded to the lifting arms. The outer ends of the box section members 104 of the frame are provided with respective stop members 119 which limit the downward pivoting of the lifting arms.

The lifting arms 110 are provided with respective spikes 122 projecting forwardly from their outer ends when said arms are in their lowered positions, the arrangement being such that when the mechanism has been mounted for use on a load-carrying trailer, a number of bales lying on the ground can be loaded in turn onto the trailer by driving the respective spikes into the bales for forward motion of the trailer and by the lifting of the respective lifting arms inboard of the trailer. (The oppositely disposed box section members 104 and the lifting arms pivotally connected thereto have their outer ends forwardly inclined very slightly. Consequently, the spikes 122, by being arranged to project forwardly from the outer ends of the lifting arms when in their lowered positions, do not project exactly at right angles to the respective arms. The result of this is that when the arms have been pivoted inboard to lift the bales onto the trailer, the spikes are upwardly inclined and this has the effect of retaining the bales on the spikes during transport.) Each spike is provided with a metal disc 123 which acts to limit the forward motion of the spike into a bale. The arrangement is such that when a bale has been spiked a short distance above its centre, it will remain suspended with its centre beneath the spike throughout the lifting movement of the lifting arm concerned inboard of the trailer. A tractor driver will very quickly learn exactly how he should spike the bales in order to be able to bring them in turn into a snugly loaded condition on the opposite sides of a central barrier bar 101 of the frame.

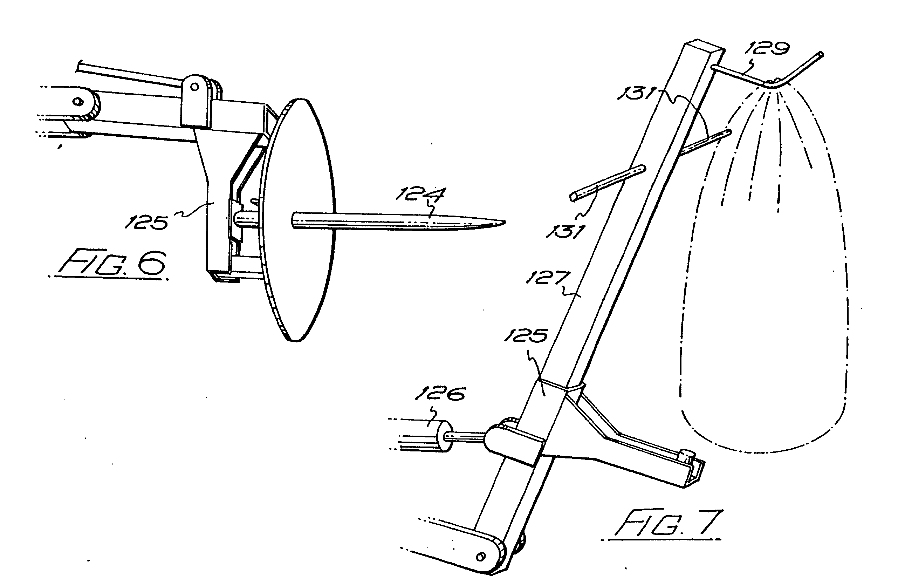

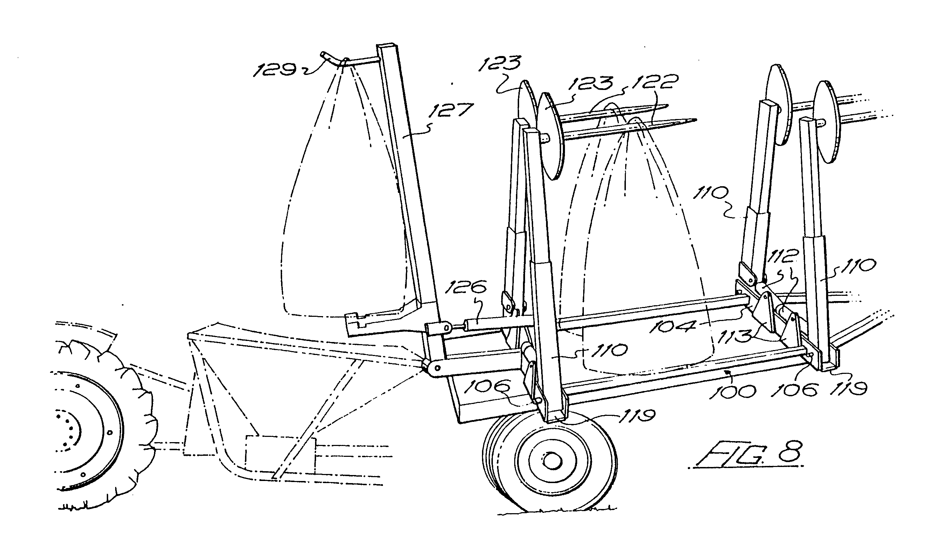

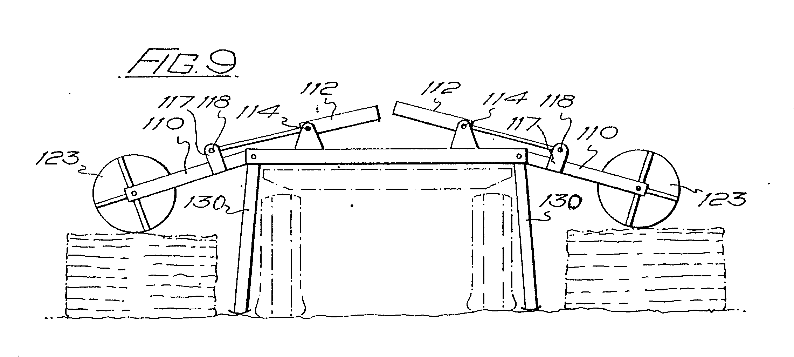

As in the first described embodiment, the rear end of the mechanism is provided with a pivotally mounted spike 124 capable of being caused to project rearwardly of the trailer on which the mechanism has been mounted (see Figure 6). The spike can be driven into a bale by reversing the trailer and the bale can then be raised to a vertical or near vertical position by the operation of the double acting hydraulic ram 126. However, in this case, the rear mounted lifting arm 125 to which the spike 124 is removably connected can be fitted with a jib 127 (see Figures 7 and 8) this having a lifting hook 129 which can be used, for example, for the lifting of sacks of seed or fertilizer. In Figure 8 a bag of fertilizer is shown suspended high above a fertilizer spreader (shown in chain-dotted lines) by the lifting hook of the jib. Other bags of fertilizer are shown to have been lifted onto the trailer by the similarly extended lifting arms 110. In Figure 7, it will be seen that in addition to the lifting hook 129 at the end of the jib, there is provided a pair of laterally projecting lifting hooks 131 at an intermediate point along the length of the jib by means of which a pair of sacks of seed or fertilizer, for example, can be elevated and transported by the rear mounted lifting arm.

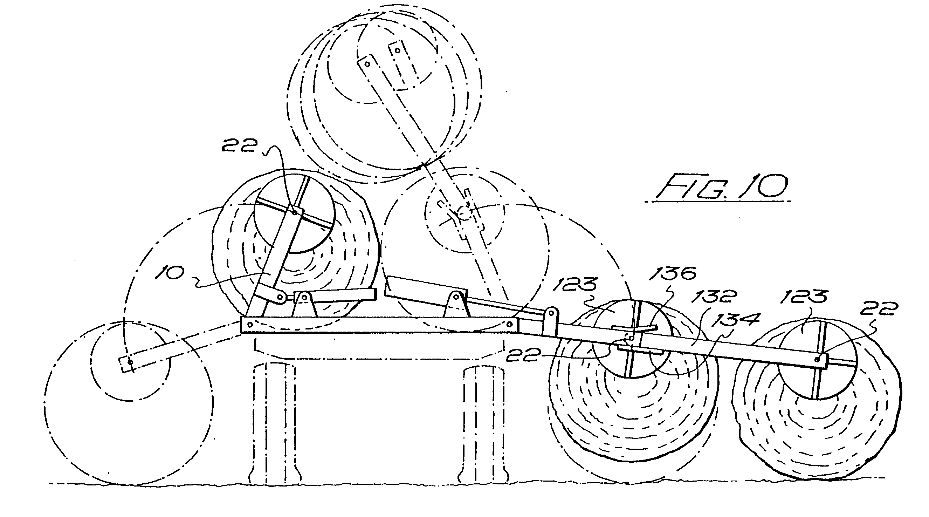

In Figure 9 there is illustrated the manner in which the bale loader, being built as a removable attachment to an agricultural load-carrying trailer, can be released from the trailer when not required for use and left standing in the corner of a barn for example. As shown, the lifting arms can be operated in such a way that their outer ends bear downwards on the ground (those in the drawing being shown bearing downwards through small bales of straw) so that, the clamps 102 having been released, the loader lifts itself off the trailer as shown. Retractable legs 130 are shown to have been lowered on each side of the trailer to take the weight of the loader, allowing the trailer to be towed away for other work. (The retractable legs may not be strictly necessary because hydraulic lock in the hydraulic rams and in the valving would enable the lifting arms to perform the dual function of support legs. However, for the sake of safety it is thought preferable that the retractable legs should be provided.)

Referring now to Figure 10, it will be seen that in a modification of the loader just described (but which could equally well be incorporated in the first described embodiment) a loader including at least one pair of oppositely disposed lifting arms has one such lifting arm 10 which merely has a spike 22 projecting forwardly from its outer end but has the other such lifting arm provided with a similar spike 22 and with an auxiliary lifting arm 132 pivotally connected to it about a horizontal axis. Stop means, in the form of plate members 134 and 136 welded to the lifting arm, are provided to limit the extent of pivotal movement of the auxiliary lifting arms relative to the lifting arm to which it is connected. The auxiliary lifting arm is provided at its outer end with a forwardly projecting spike 22.

The arrangement is such that the spike carried by the lifting arm devoid of an auxiliary lifting arm can first be driven into a bale standing on the ground and that bale can then be lifted onto or into overlying relationship with the load-carrying frame or deck as shown in full lines in the drawing. Subsequently, the spike carried by the oppositely disposed lifting arm can be driven into a further bale standing on the ground and, following a slight lifting of the latter bale so that it is clear of the ground as shown in full lines in the drawing, the spike carried by the auxiliary lifting arm can be driven into a still further bale standing on the ground. Lifting of the lifting arm 10 and connected auxiliary lifting arm 132 then effects the loading of said further bale onto or into overlying relationship with the load-carrying frame or deck and into side-by-side relationship with the first mentioned bale, as shown in chain-dotted lines in the drawing, and effects the loading of said still further bale into a position seated upon and between the pair of side-by-side bales, also as shown in chain-dotted lines. It will be understood that the stop means 134 and 136 come into operation, respectively, when loading and when unloading the pair of bales which are lifted and lowered by the lifting arm 10 and connected auxiliary arm 132.

It is possible for both lifting arms to be provided with respective auxiliary lifting arms. In this way, each pair of oppositely disposed lifting arms will be capable of lifting four bales of hay and stacking them two-high on the load-carrying frame or deck.

Various other modifications may be made. For example, the lifting arms could be provided with two or more holes usable selectively for the connection of different sizes of spike for the loading of different diameters of bales.

Furthermore, it will be understood that in the embodiment illustrated in Figures 1 to 3, by making the trailer somewhat wider the lifting arms could be arranged in oppositely disposed pairs along the length of the trailer. Similarly, the lifting arms in the embodiment illustrated in Figures 5 to 9 could be arranged in staggered relation, if preferred, for the loading of the bales singly along the length of the trailer. The baler may of course be designed for the loading of a different number of bales than in the illustrated embodiments.

The jib which is illustrated in Figures 7 and 8 and which is capable of being fitted to the rear mounted lifting arm may be modified in numerous ways to suit any special lifting requirement. It will also be understood that in order to make it capable of lifting a load to a greater height above ground level, or make it capable of lifting an even greater load, without employing an excessively large hydraulic ram, the jib may be made extensible so that the load can first be lifted from the ground with the jib relatively short, the jib being extended, preferably by power operated means, when it has been fully raised or substantially fully raised to the vertical.

It would be quite possible for a very short version of the loader, perhaps capable of carrying only three round bales of hay in substantially the manner illustrated in Figure 10, to be linkage mounted at the rear of a farm tractor. It would also be possible for the arrangement illustrated in Figures 5 to 9 to be simply provided with a pair of ground wheels and a drawbar instead of being removably mounted on a standard trailer.

## Claims

1. An agricultural bale loader including power operated mechanism for lifting a plurality of bales in turn onto or into overlying relationship with a load-carrying frame or deck, the mechanism being constituted by a plurality of lifting arms (10, 110) capable of being moved pivotally outboard or inboard of the frame or deck characterised in that the lifting arms are selectively movable and arranged to project alternately from opposite sides of the trailer, or in oppositely disposed pairs, along the length of the load-carrying frame or deck, and having respective spikes (22, 122) projecting forwardly from their outer ends, the arrangement being such that the spikes can be driven in turn into bales standing on the ground by forward motion of the vehicle on which the loader is mounted or of which it forms a part, said bales being lifted as they are spiked in turn onto or into overlying relationship with the load-carrying frame or deck.

2. An agricultural bale loader as claimed in claim 1, in which the lifting arms (10) are pivotally mounted between respective pairs of transverse cross members (20, 20) their pivotal connection being set inwardly from the side edges of the load-carrying deck so that they are supported by said pairs of cross members against rearward bending when in their laterally projecting positions.

3. An agricultural bale loader as claimed in either one of the preceding claims, in which the power operated means provided for moving the lifting arms outboard or inboard of the load-carrying frame or deck are constituted by respective double acting hydraulic rams (12).

4. An agricultural bale loader as claimed in claim 3, in which the hydraulic rams (12) are pivotally connected to the respective lifting arms (10) by removable pins (18), said pins being removed to allow the lifting arms (10) to be accommodated in the transverse slots in the load-carrying deck when not required for use.

5. An agricultural bale loader as claimed in any one of the preceding claims, a rear end thereof being provided with at least one pivotally mounted spike (24, 124) capable of being caused to project rearwardly of the load-carrying deck to be driven into a bale by reversing the loader and capable of being pivoted to a vertical or near vertical position by power operated means to load the bale onto or into overlying relationship with the rear of the load-carrying deck.

6. An agricultural bale loader as claimed in claim 5, in which said at least one rear mounted spike (24, 124) is able to be replaced by a boom (127) capable of being pivoted by the power operated means to constitute a load-lifting crane.

7. An agricultural bale loader as claimed in any one of the preceding claims, further characterised in that the mechanism for lifting the bales in turn onto or into overlying relationship with the load-carrying frame or deck is constituted by a plurality of lifting arms (110) arranged in at least one oppositely disposed pair and capable of being moved pivotally outboard or inboard of the frame or deck, selectively, the lifting arms having respective spikes (22) projecting forwardly from their outer ends, and at least one of the lifting arms of the or each pair of oppositely disposed lifting arms being pivotally connected to an auxiliary lifting arm (132) which is provided at its outer end with a forwardly projecting spike (22), stop means (134, 136) being provided to limit the extent of pivotal movement of the auxiliary lifting arm (132) relative to the lifting arm (110) to which it is connected, the arrangement being such that a spike carried by the other lifting arm can be driven into a bale standing on the ground, said bale then being lifted onto or into overlying relationship with the load-carrying frame or deck, and such that subsequently, the spike carried by the oppositely disposed lifting arm can be driven into a further bale standing on the ground, and following a slight lifting of the latter bale clear of the ground, the spike carried by the auxiliary lifting arm can be driven into a still further bale standing on the ground, lifting of the lifting arm (110) and connecting auxiliary lifting arm (132) then effecting the loading of said further bale onto or into overlying relationship with the load-carrying frame or deck and into side by side relationship with the first mentioned bale and effecting the loading of the said still further bale into a position above the pair of side by side bales or into a position seated upon and between the pair of side by side bales.

8. An agricultural bale loader as claimed in any one of the preceding claims, built as a removable attachment to an agricultural load-carrying trailer, the loader being provided with retractable legs (130) whereby, when no longer required for use, the loader can be released from the trailer, the lifting arms being operated in such a way that their outer ends bear downwards either directly or indirectly on the ground so that the loader lifts itself off the trailer and the retractable legs can then be lowered to take the weight of the loader.

## Patentansprüche

1. Landwirtschaftlicher Ballenlader mit einem angetriebenen Mechanismus zum aufeinanderfolgenden Anheben mehrerer Ballen aus eine oder in überdeckende Beziehung zu einem lasttragenden Rahmen oder einer Plattform, wobei der Mechanismus aus mehreren Hubarmen (10, 110) gebildet ist, die in eine außerhalb oder innerhalb des Rahmens oder der Plattform befindliche Stellung verschwenkbar sind, dadurch gekennzeichnet, daß die Hubarme wahlweise bewegbar und so angeordnet sind, daß sie längs des lasttragenden Rahmens oder der Plattform abwechselnd oder in gegenüberliegenden Paaren über die gegenüberliegenden Seiten des Anhängers vorstehen, und daß die Hubarme zugeordnete Dorne (22, 122) aufweisen, die von ihren äußeren Enden nach vorne ragen, wobei die Anordnung derart ist, daß die Dorne nacheinander in die auf dem Boden stehenden Ballen eingetrieben werden können durch ein Vorwärtsbewegung des Fahrzeugs, an dem der Ballenlader angeordnet ist oder von dem er einen Teil bildet, wobei die aufgespießten Ballen nacheinander auf den oder in eine überdeckende Beziehung zu dem lasttragenden Rahmen oder der Plattforme angehoben werden.

2. Ballenlader nach Anspruch 1, wobei die Hubarme (10) zwischen zugehörigen Paaren von Querträgern (20, 20) schwenkbar gelagert sind, wobei ihr Anlenkpunkt von den Seitenrändern der lasttragenden Plattform nach innen versetzt ist, so daß die Hubarme von den beiden Querträgern gegen ein Umbiegen nach hinten abgestützt sind, wenn sie sich in ihren seitlich vorspringenden Lagen befinden.

3. Ballenlader nach einem der vorhergehenden Ansprüche, wobei der zum Bewegen der Hubarme in ihre außerhalb oder innerhalb des lasttragenden Rahmens oder der Plattform liegende Stellung dienende Einrichtung von entsprechenden hydraulischen Kolben-Zylinder-Aggregaten gebildet sind.

4. Ballenlader nach Anspruch 3, wobei die hydraulischen Aggregate (12) durch abnehmbare Stifte (18) mit den zugeordneten Hubarmen (10) verbunden sind, wobei diese Stifte abnehmbar sind, damit die Hubarme (10) bei Nichtgebrauch in den Querschlitzen der lasttragenden Plattform verstaubar sind.

5. Ballenlader nach einem der vorhergehenden Ansprüche, wobei ein hinteres Ende des Ballenladers mit mindestens einem schwenkbar gelagerten Dorn (24, 124) versehen ist, der in eine von der lasttragenden Plattform nach hinten vorspringende Lage bringbar und durch Rückwärtsbewegen des Ballenladers in einen Ballen eintreibbar ist und durch die Antriebseinrichtung in eine vertikale oder annähernd vertikale Lage verschwenkbar ist, um den Ballen auf das oder eine überdeckende Beziehung zu dem hinteren Ende der lasttragenden Plattform zu laden.

6. Ballenlader nach Anspruch 5, wobei der oder die hinten angeordneten Dorne (24, 124) durch einen Ausleger (127) ersetzbar sind, der durch die Antriebseinrichtung verschwenkbar ist, um einen Lastkran zu bilden.

7. Ballenlader nach einem der vorhergehenden Ansprüche, dadurch gekennzeichnet, daß der Mechanismus zum aufeinanderfolgenden Anheben der Ballen auf den oder in überdeckende Beziehung zu dem lasttragenden Rahmen oder der Plattform aus mehreren Hubarmen (110) besteht, die in mindestens einem gegenüberliegenden Paar angeordnet und wahlweise in eine außerhalb oder innerhalb des Rahmens oder der Plattform liegende Stellung verschwenkbar sind, wobei die Hubarme entsprechende Dorne (22) aufweisen, die von ihren äußeren Enden nach vorne ragen, und wobei zumindest ein Hubarm eines jeden Paares der einander gegenüberliegenden Hubarme mit einem zusätzlichen Hubarm (132) schwenkbar verbunden ist, der an seinem äußeren Ende mit einem nach vorne ragenden Dorn (22) versehen ist, wobei Anschlagmittel (134, 136) vorgesehen sind, um die Schwenkbewegung des zusätzlichen Hubarms (132) gegenüber dem Hubarm (110) zu begrenzen, mit dem er verbunden ist, wobei die Anordnung derart ist, daß ein von dem anderen Hubarm getragener Dorn in eine auf dem Boden stehenden Ballen eintreibbar ist, der sodann auf den oder in eine überdeckende Beziehung zu dem lasttragenden Rahmen oder der Plattform anhebbar ist und daß sodann der von dem gegenüberliegenden Hubarm getragene Dorn in einen weiteren auf dem Boden stehenden Ballen eintreibbar ist, woraufhin nach einem leichten Anheben dieses Ballens vom Boden der von dem zusätzlichen Hubarm getragene Dorn in noch einen weiteren auf dem Boden stehenden Ballen eintreibbar ist, daß der Hubarm (110) und der damit verbundene zusätzliche Hubarm (132) anhebbar sind, um den weiteren Ballen auf oder in eine überdeckende Beziehung zu dem lasttragenden Rahmen oder der Plattform und in eine neben dem erstgenannten Ballen liegende Stellung zu bringen, und um den noch weiteren Ballen in eine Stellung über den beiden nebeneinanderliegenden Ballen oder in eine Stellung auf und zwischen den beiden nebeneinanderliegenden Ballen zu bringen.

8. Ballenlader nach einem der vorhergehenden Ansprüche, der an einem landwirtschaftlichen Lastfahrzeug abnehmbar befestigt ist, wobei der Ballenlader mit einziehbaren Beinen (130) versehen ist, wodurch der Ballenlader bei Nichtgebrauch von dem Lastfahrzeug abnehmbar ist, wobei die Hubarme derart betätigt werden, daß sich ihre äußeren Enden entweder unmittelbar oder mittelbar nach unten auf dem Boden abstützen, so daß sich der Ballenlader selbst von dem Lastwagen abhebt, woraufhin die einziehbaren Beine absenkbar sind, um das Gewicht des Ballenladers aufzunehmen.

**Revendications**

1. Chargeur agricole de balles comprenant des mécanismes commandés mécaniquement pour élever un certain nombre de balles tour à tour sur ou en relation recouvrant un châssis ou pont porteur de la charge, les mécanismes étant constitués d'un certain nombre de bras élévateurs (10, 110) pouvant être déplacés en pivotant vers l'extérieur ou vers l'intérieur du châssis ou pont, caractérisé en ce que les bras élévateurs sont sélectivement mobiles et agencés pour dépasser alternativement de côtés opposés de la remorque, ou par paires disposées de manière opposée, sur la longueur du châssis porteur de la charge et ayant des pointes respectives (22, 122) dépassant vers l'avant de leurs extrémités externes, l'agencement étant tel que les pointes puissent être entraînées tour à tour dans les balles se trouvant au sol, par un mouvement d'avance du véhicule sur lequel est monté le chargeur ou dont il fait partie, lesdites balles étant élevées alors qu'elles sont piquées tour à tour sur ou en relation de recouvrement avec le châssis de support de la charge ou pont.

2. Chargeur agricole de balles selon la revendication 1, où les bras élévateurs (10) sont montés pivotants entre des paires respectives d'organes transversaux (20, 20), leur connexion pivotante étant décalée vers l'intérieur des bords latéraux du pont de support de la charge de manière qu'ils soient supportés par ladite paire d'organes transversaux contre une flexion vers l'arrière lorsqu'ils sont à leurs positions dépassant latéralement.

3. Chargeur agricole de balles selon l'une quelconque des revendications précédentes où les moyens commandés mécaniquement prévus pour déplacer les bras élévateurs vers l'extérieur ou vers l'intérieur du châssis ou pont de support de la charge sont constitués de vérins hydrauliques respectifs à double action (12).

4. Chargeur agricole de balles selon la revendication 3, où les vérins hydrauliques (12) sont connectés pivotants aux bras élévateurs respectifs (10) par des broches amovibles (18), lesdites broches étant enlevées pour permettre aux bras élévateurs (18) d'être reçus dans les fentes transversales du pont de support de la charge lorsqu'ils ne sont par requis pour une utilisation.

5. Chargeur agricole de balles selon l'une quelconque des revendications précédentes, une extrémité arrière de celui-ci étant pourvue d'au moins une pointe (24, 124) montée pivotante pouvant être forcée à dépasser vers l'arrière du pont porteur de la charge pour être entraînée dans une balle en inversant le chargeur et pouvant être pivotée à une position verticale ou presque verticale par des moyens commandés mécaniquement pour charger les balles sur ou en relation de recouvrement avec l'arrière du pont porteur de la charge.

6. Chargeur agricole de balles selon la revendication 5, où ladite au moins une pointe montée à l'arrière (24, 124) peut être remplacée par une flèche (127) pouvant être pivotée par les moyens commandés mécaniquement pour constituer une grue élévatrice de la charge.

7. Chargeur agricole de balles selon l'une quelconque des revendications précédentes caractérisé de plus en ce que le mécanisme pour élever les balles tour à tour sur ou en relation de recouvrement avec le châssis ou pont porteur de la charge est constitué d'un certain nombre de bras élévateurs (110) agencés en au moins un paire disposée de manière opposée et pouvant être déplacée en pivotant vers l'extérieur ou vers l'intérieur du châssis ou pont, sélectivement, les bras élévateurs ayant des pointes respective (22) dépassant vers l'avant de leurs extrémités externes, et au moins l'un des bras élévateurs de ou de chaque paire de bras élévateurs disposés de manière opposée étant connecté pivotant à un bras élévateur auxiliaire (132) qui est pourvu, à son extrémité externe, d'une pointe (22) dépassant vers l'avant, des moyens d'arrêt (134, 136) étant prévus pour limiter l'étendue du mouvement pivotant du bras élévateur auxiliaire (132) relativement au bras élévateur (110) auquel il est connecté, l'agencement étant tel qu'une pointe portée par l'autre bras élévateur puisse être entraînée dans une balle se trouvant au sol, ladite balle étant alors élevée sur ou en relation de recouvrement avec le châssis ou pont porteur de la charge et de manière que subséquemment la pointe portée par le bras élévateur disposé de manière opposée puisse être entraînée dans une autre balle se trouvant au sol, et suivant une légère élévation de cette dernière balle au loin du sol, la pointe portée par le bras élévateur auxiliaire puisse être entraînée dans une autre balle se trouvant au sol, l'élévation de bras élévateur (110) et du bras élévateur auxiliaire (132) qui lui est connecté effectuant alors le chargement de ladite autre balle sur ou en relation de recouvrement avec le châssis ou pont porteur de la charge et en relation côte à côte avec la première balle mentionnée et effectuant le chargement de ladite autre balle en une position au-dessus de la paire de balles, côte à côte ou dans une position se trouvant sur et entre la paire de balles côte à côte.

8. Chargeur agricole de balles selon l'une quelconque des revendications précédentes, construit comme un organe auxiliaire d'une remorque porteuse d'une charge agricole, le chargeur étant pourvu de pieds rétractables (130) pour qu'ainsi, lorsqu'il n'est plus requis pour l'utilisation, le chargeur puisse être libéré de la remorque, les bras élévateurs étant manoeuvrés de manière que leurs extrémités externes portent vers le bas soit directement ou indirectement sur le sol pour que le chargeur s'élève lui-même au loin de la remorque et les pieds rétractables peuvent alors être abaissés pour supporter le poids du chargeur.

FIG. 1

FIG. 2

FIG. 3

*FIG.4*

FIG.5

FIG. 7

FIG. 6

FIG. 8

FIG.9

0 125 755

*FIG.10*